Europäisches Patentamt

European Patent Office

Office européen des brevets

(19)

(11) Veröffentlichungsnummer: **0 065 651**

**A2**

(12) # EUROPÄISCHE PATENTANMELDUNG

(21) Anmeldenummer: **82103429.5**

(22) Anmeldetag: **23.04.82**

(51) Int. Cl.³: **B 60 G 17/04**

(30) Priorität: **21.05.81 DE 3120178**

(43) Veröffentlichungstag der Anmeldung:
**01.12.82 Patentblatt 82/48**

(84) Benannte Vertragsstaaten:
**AT CH DE FR GB IT LI SE**

(71) Anmelder: **WABCO Westinghouse Fahrzeugbremsen GmbH**
**Am Lindener Hafen 21 Postfach 91 12 80**
**D-3000 Hannover 91(DE)**

(72) Erfinder: **Bergemann, Klaus-Dieter, Ing. grad.**
**Dohmeyers Weg 2**
**D-3000 Hannover 61(DE)**

(72) Erfinder: **König, Heinz-Werner**
**Luisenstrasse 6**
**D-3013 Barsinghausen 8(DE)**

(72) Erfinder: **Kiel, Bernd-Joachim, Ing. grad.**
**Königsberger Strasse 7**
**D-3050 Wunstorf 1(DE)**

(72) Erfinder: **Deike, Karl-Heinz, Ing. grad.**
**Feldstrasse 17**
**D-3017 Pattensen(DE)**

(74) Vertreter: **Schrödter, Manfred**
**WABCO Westinghouse Fahrzeugbremsen GmbH Am Lindener Hafen 21 Postfach 91 12 80**
**D-3000 Hannover 91(DE)**

(54) **Steuereinrichtung für ein luftgefedertes Fahrzeug.**

(57) Die Erfindung betrifft eine Steuereinrichtung für ein luftgefedertes Fahrzeug mit einer ersten und einer zweiten luftgefederten Achse.

Der Druck in den Luftfederbälgen der zweiten Achse wird in Abhängigkeit vom Druck in den Luftfederbälgen der ersten Achse gesteuert. Die Luftfederbälge der zweiten Achse sind über ein Relaisventil mit einem Druckmittelvorratsbehälter verbunden. Der Steuereingang des Relaisventils steht mit den Luftfederbälgen der ersten Achse in Verbindung.

Das Relaisventil ist so ausgebildet, daß bei ausbleibendem oder relative geringem Steuerdruck am Steuereingang der Druck an dem zu den Luftfederbälgen der zweiten Achse führenden Ausgang des Relaisventils einen Mindestwert aufweist.

Vorteilhafterweise ist der die erste Steuerkammer von der zweiten Steuerkammer trennende Relaiskolben geteilt ausgebildet. Zwischen den beiden Relaiskolbenteilen ist eine Druckfeder angeordnet, durch welche die Höhe des in die Luftfederbälge der zweiten Achse einzusteuernden Druckes bei Ausfall des Steuerdruckes vorbestimmbar ist.

FIGUR 1:

Hannover, den 18.5.1981
WP 16/81 K./Gb


WABCO Fahrzeugbremsen GmbH, Hannover


Steuereinrichtung für ein luftgefedertes Fahrzeug


Die Erfindung betrifft eine Steuereinrichtung für ein luftgefedertes Fahrzeug gemäß dem Oberbegriff des Patentanspruchs 1.


Derartige Steuereinrichtungen werden z.B. zur Druckregelung in den Luftfederbälgen von luftgefederten Nutzfahrzeugen eingesetzt, welche für den Transport von sehr hohen Nutzlasten ausgelegt sind und aus diesem Grunde drei Achsen besitzen, wobei zwei Achsen zu einem Doppelachsaggregat zusammengefaßt sind.


Beim Einsatz von Fahrzeugen dieser Art unterliegt die Doppelachse nicht immer Höchstbelastungen, d.h., das

- 2 -

Fahrzeug läuft zeitweise leer, oder es ist so leicht beladen, daß die Belastung von einer Einzelachse aufgenommen werden könnte.

Es ist daher bekannt (DE-OS 29 25 190), die zweite Achse des Doppelachsaggregats zur Schonung gewichtsmäßig zu entlasten, wobei der Druck in den Luftfederbälgen der zweiten Achse in Abhängigkeit vom Druck in den Luftfederbälgen der ersten Achse gesteuert wird.

Bei der Einrichtung nach der erwähnten DE-OS 29 25 190 ist ein Druckregelventil vorgesehen, das einen als Stufenkolben ausgebildeten, gegen die Kraft einer Regelfeder verschiebbaren ersten Steuerkolben aufweist, dessen als Stufen ausgebildete Wirkflächen gleich groß sind und auch in gleicher Richtung von der Druckluft aus den Luftfederbälgen einer Fahrzeugachse beaufschlagt werden. Der erste Steuerkolben begrenzt eine erste Steuerkammer, die über ein Umschaltventil an die beiden Luftfederbälge einer ersten Fahrzeugachse angeschlossen ist. Das Umschaltventil ist so ausgebildet, daß bei intakten Luftfederbälgen und Anschlußleitungen die Druckluft aus den beiden Luftfederbälgen in die erste Steuerkammer gelangt. Fällt ein Luftfederbalg ganz oder teilweise aus, so wird die Funktion des Druckregelventils durch die Druckluft aus dem zweiten Luftfederbalg voll und ganz aufrechterhalten. Die erste Steuerkammer ist über ein Mehrwegeventil mit einer zweiten Steuerkammer verbindbar, die mit den Luftfederbälgen einer zweiten Fahrzeugachse verbunden ist. Die zweite Steuerkammer wird von einem zweiten, gegen die Kraft einer Feder verschiebbaren Steuerkolben begrenzt, welcher von der Druckluft aus den Luftfederbälgen der zweiten Fahrzeugachse beaufschlagt wird und dem ersten Steuerkolben entgegenwirkt. Der erste Steuerkolben und der zweite Steuerkolben sind über eine Schleppverbindung, die Bestandteil des Mehrwege-Ventils ist, miteinander verbunden. Die besondere Anordnung und Verbindung der beiden Steuerkolben im Druckregelventil ermöglicht ein bestimmtes Ansprechverhalten des Druckregelventils.

Diese bekannte Einrichtung hat den Nachteil, relativ aufwendig im Aufbau zu sein.
Es ist zwar sichergestellt, daß auch bei Ausfall des Druckes an einem Luftfederbalg der ersten Fahrzeugachse der Druck in den Luftfederbälgen der zweiten Fahrzeugachse störungsfrei geregelt wird; jedoch werden bei Ausfall beider Luftfederbälge der ersten Fahrzeugachse auch die Luftfederbälge der zweiten Fahrzeugachse drucklos.

Der Erfindung liegt deshalb die Aufgabe zugrunde, eine Steuereinrichtung der eingangs genannten Art zu schaffen, die einfach im Aufbau ist und die Möglichkeit bietet, daß mit einfachen Mitteln auch bei Drucklosewerden beider Luftfederbälge der ersten Achse oder auch bei zu geringem Steuerdruck ein Mindestdruck in den Luftfederbälgen der zweiten Achse aufrechterhalten wird.

Diese Aufgabe wird mit der im Patentanspruch 1 angegebenen Erfindung gelöst.

Vorteilhafte Weiterbildungen und Ausgestaltungen der Erfindung sind in den Unteransprüchen angegeben.

Die erfindungsgemäße Steuereinrichtung bietet den Vorteil, in den Luftfederbälgen der zweiten Achse stets einen Mindestdruck einsteuern und halten zu können.

Zudem kann auf ein Umschaltventil zwischen den Luftfederbalganschlüssen der den Steuerdruck liefernden Luftfederbälge verzichtet werden.

Vorteilhafterweise ist es möglich, den Druck in den Luftfederbälgen der zweiten Fahrzeugachse unabhängig vom Steuerdruck aus den Luftfederbälgen der ersten Fahrzeugachse auf einem vorbestimmbaren Druckniveau zu halten, oder auch auf einen Wert anzuheben, der oberhalb des Druckes in den Luftfederbälgen der ersten Fahrzeugachse liegt.

Die Erfindung wird nachstehend an Hand von zwei Ausführungsbeispielen näher erläutert.

Es zeigen

Fig. 1 ein Relaisventil mit einem geteilten Relaiskolben und mit zwei Eingängen für die von den Luftfederbälgen einer Fahrzeugachse gelieferte Steuerluft sowie einen mit einem Druckmittel-Vorratsbehälter verbundenen Eingang.

Fig. 2 ein Relaisventil mit nur einem Relaiskolben.

Fig. 3 u. 4 ein Diagramm, welches den ausgesteuerten Druck in Abhängigkeit vom Steuerdruck darstellt.

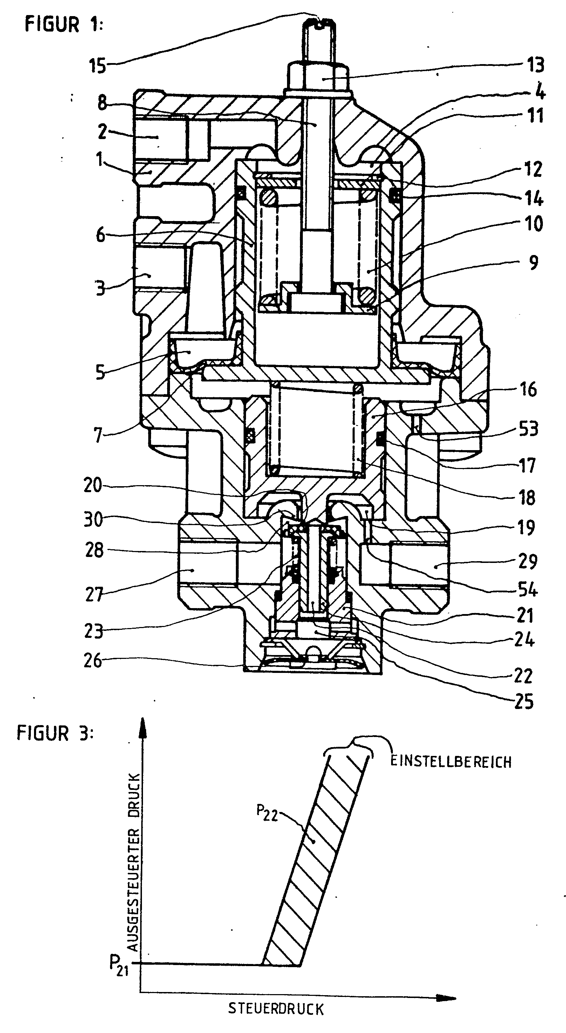

Das in Fig. 1 dargestellte Relaisventil weist einen in zwei Relaiskolbenteile 6 und 16 aufgeteilten Relaiskolben auf. Eine erste, in zwei druckdicht voneinander getrennte Ringkammern 4 und 5 unterteilte Steuerkammer ist mit zwei im Ventilgehäuse 1 angeordneten Steuereingängen 2 und 3 verbunden. Die erste Steuerkammer 4, 5 wird vom ersten Relaiskolbenteil 6 begrenzt, welches von einer ringförmigen Membran 7 umschlossen wird. Die ringförmige Membran 7 ist mit zwei diese begrenzenden Dichtlippen versehen, von denen eine sich im aufgezogenen Zustand am Relaiskolbenteil 6 und die andere in einer entsprechenden Ausnehmung im Ventilgehäuse 1 dichtend abstützt. Durch eine im Ventilgehäuse 1 angeordnete Gewindebohrung ist ein Gewindebolzen 8 geführt, der in das Relaiskolbenteil 6 hineinragt und an seinem in das Relaiskolbenteil 6 hineinragenden Ende einen Federteller 9 trägt, während sein anderes Ende mit einen zur Einstellung nötigen Schlitz 15 versehen ist. Eine erste Druckfeder 10 stützt sich einerseits auf dem Federteller 9 ab und wird andererseits von einem weiteren Federteller 11 und einem in die Innenwand des Relaiskolbenteils 6 eingesetzten Sprengring 12 im Relaiskolbenteil 6 gehalten. Auf das aus dem Ventilgehäuse 1 herausragende Ende des Gewindebolzens 8 ist eine selbstdichtende Kontermutter 13 aufgeschraubt, mittels welcher die über den Gewindebolzen 8 eingestellte Vorspannung der Druckfeder 10 gesichert wird. Eine in die Wandung des Relaiskolbenteils 6 eingelegte Dichtung 14 dichtet die als erste Steuerkammer vorgesehene Ringkammer 4 und gleichzeitig als Kolbenführung dienende Gehäusebohrung gegen die ebenfalls als erste Steuerkammer dienende Ringkammer 5 und die als Membranbefestigungsstelle dienende Gehäuseausnehmung ab. In einer unterhalb des ersten Relaiskolbenteils 6 im Ventilgehäuse 1 angeordneten Gehäusebohrung ist ein zweites Relaiskolbenteil 16 gegen die Kraft einer zweiten Druckfeder 18 verschiebbar angeordnet. Die zweite Druckfeder 18 stützt sich einerseits auf dem Boden des zweiten Relaiskolbenteils 16 und andererseits am Boden des ersten Relaiskolbenteils 6 ab. Ein in die Wandung des zweiten Relaiskolbenteils 16 eingelegter Dichtring 17 dichtet die als zweite Steuerkammer 19 dienende, vom zweiten Relaiskolbenteil 16 begrenzte Gehäusebohrung gegen den Raum zwischen dem ersten Relaiskolbenteil 6 und dem zweiten Relaiskolbenteil 16 ab. Das zweite Relaiskolbenteil 16 weist an seiner die zweite Steuerkammer 19 begrenzenden Seite einen als Auslaßventilsitz 20 dienenden Fortsatz auf, der durch einen als Einlaßventilsitz 30 dienenden Gehäusesteg in eine Druckmitteleinlaßkammer 28 hineinragt. Die Druckmitteleinlaßkammer 28 ist einerseits über einen Druckmitteleingang 27 mit einem nicht dargestellten Druckmittelvorratsbehälter und andererseits über einen Druckmittelausgang 29 mit den ebenfalls nicht gezeigten Luftfederbälgen einer zweiten Fahrzeugachse verbunden. Ein in der Druckmitteleinlaßkammer 28 angeordneter, ringförmiger Körper 21 weist eine in Längsrichtung verlaufende Bohrung auf, die als Führung für einen Doppelsitzventil-Verschlußkörper 24 dient. Der Doppelsitzventil-Verschlußkörper 24 ist mit einer Längsbohrung 22 versehen, über welche die zweite Steuerkammer 19 mit einer im Ventilgehäuse 1 vorgesehenen Entlüftung 25,26 verbindbar ist. Eine Druckfeder 23 stützt sich am ringförmigen Körper 21 ab und drückt den Doppelsitzventil-Verschlußkörper 24 gegen den Auslaßventilsitz20. Um ein sich bildendes Luftpolster zu vermeiden, ist es zweckmäßig, den Raum unter der Membran 7, zwischen den Relaiskolbenteilen 6,16, über eine Bohrung 53 mit der Atmosphäre zu verbinden. Zwischen der zweiten Steuerkammer 19 und dem Druckmittelausgang 29 ist vorteilhafterweise eine Drosselbohrung 54 vorgesehen.

Die Funktion dieses Relaisventils wird im folgenden näher erläutert.

Über den Steuereingang 2 strömt Druckluft von einem Luftfederbalg einer ersten Fahrzeugachse in die als erste Steuerkammer dienende Ringkammer 4 und über den Steuereingang 3 strömt Druckluft von einem weiteren Luftfederbalg derselben Fahrzeugachse, welche auf der gegenüberliegenden Fahrzeugseite angeordnet ist, in die zur ersten Steuerkammer gehörende Ringkammer 5 des Relaisventils. Da die Kraft der Druckfeder 18 das Einlaßventil 30,

- 7 -

24 über das Relaiskolbenteil 16 sowie den Doppelsitzventil-Verschlußkörper 24 gegen die Druckfeder 18 geöffnet hält, gelangt gleichzeitig von einem Druckmittel-
Vorratsbehälter Druckluft über den Druckmitteleingang 27,
die Druckmitteleinlaßkammer 28, das geöffnete Einlaßventil - Doppelsitzventil-Verschlußkörper 24, Einlaßventilsitz 30 - sowie die zweite Steuerkammer 19 und
den druckmittelausgang 29 in die Luftfederbälge einer
zweiten Fahrzeugachse. Das Auslaßventil - Auslaßventilsitz 20, Doppelsitzventil-Verschlußkörper 24, Bohrung 22 -
wird in dieser Phase vom zweiten Relaiskolbenteil 16
mittels der Kraft der zweiten Druckfeder 18 geschlossen
gehalten. Ist der sich in der zweiten Steuerkammer 19
aufbauende Druck soweit angestiegen, daß er das Relaiskolbenteil 16 gegen die Druckfeder 18 verschiebt, so
folgt der Doppelsitzventil-Verschlußkörper 24 durch die
Federkraft der Feder 23 und dichtet gegen den Einlaßventilsitz 30 die Druckmitteleinlaßkammer 28 gegen die
zweite Steuerkammer 19 ab. Der Druck in den Luftfederbälgen der zweiten Fahrzeugachse wird in dieser Phase
gehalten (Fig. 3, P 21).
Der sich in der ersten Steuerkammer 4,5 aufbauende Druck
verschiebt das erste Relaiskolbenteil 6 gegen die Kraft
der Druckfedern 10 und 18 in Richtung auf das zweite
Relaiskolbenteil 16 zu und legt sich auf dieses auf.
Das zweite Relaiskolbenteil 16 hebt dabei den Doppelsitzventil-Verschlußkörper 24 vom Einlaßventilsitz 30
ab.
Von der Druckmitteleinlaßkammer 28 gelangt jetzt wieder
Druckluft in die zweite Steuerkammer 19 und weiter in
die Luftfederbälge der zweiten Fahrzeugachse. In die
zweite Steuerkammer 19 und somit auch in die Luftfederbälge der zweiten Fahrzeugachse wird solange Druckluft
eingesteuert, bis der Druck in der zweiten Steuerkammer 19
soweit angestiegen ist, bis ein Kräftegleichgewicht zwischen den beiden auf die Relaiskolbenteile 6 und 16 entgegengerichtet einwirkenden Kräfte erreicht ist. Das Einlaßventil 30, 24 schließt und der Druck in den Luftfederbälgen der zweiten Fahrzeugachse wird gehalten (s. Fig. 3 Druck P 22).

Sinkt der Druck in der ersten Steuerkammer 4,5 ab, so wird das erste Relaiskolbenteil 6 von der ersten Druckfeder 10 in Richtung auf seine Ausgangsstellung zu verschoben. Die Spannung der das zweite Relaiskolbenteil 16 belastenden zweiten Druckfeder 18 verringert sich. Sinkt der Druck in den Luftfederbälgen der ersten Fahrzeugachse und somit auch in der ersten Steuerkammer 4,5 auf einen Wert ab, der unterhalb des Druckwertes des Druckes in den Luftfederbälgen der zweiten Fahrzeugachse liegt, so wird das zweite Relaiskolbenteil 16 vom Druck in der zweiten Steuerkammer 19 in Richtung auf das erste Relaiskolbenteil 6 zu verschoben. Der Auslaßventilsitz 20 hebt vom Doppelsitzventil - Verschlußkörper 24 ab, so daß das Auslaßventil 20, 24,22 geöffnet und die Luftfederbälge der zweiten Fahrzeugachse über die Entlüftung 25,26 mit der Atmosphäre verbunden werden.

Ist der Druck in den Luftfederbälgen der zweiten Fahrzeugachse und somit auch in der zweiten Steuerkammer 19 auf einen Wert abgebaut, der der Kraft der zweiten Druckfeder 18 entspricht, so legt sich der Auslaßventilsitz 20 wieder auf den Doppelsitzventil-Verschlußkörper 24 auf und das Auslaßventil 20,22,24 ist geschlossen. Die Druckluftzufuhr zu den Luftfederbälgen der zweiten Fahrzeugachse bleibt unterbrochen, da auch das Einlaßventil 24,30 geschlossen ist. Erst bei einer Veränderung des Druckes in den Luftfederbälgen der ersten Fahrzeugachse und somit auch in der ersten Steuerkammer 4,5 wird das Doppelsitzventil 20,22,24,30 betätigt und dadurch der Druck in den Luftfederbälgen der zweiten Fahrzeugachse verändert.

Die Wirkflächen der beiden Relaiskolbenteile 6,16 sind so ausgelegt, daß mit einer relativ niedrigen Druckänderung aus den Luftfederbälgen der ersten Fahrzeugachse eine hohe Druckänderung in den Luftfederbälgen der zweiten Fahrzeugachse gesteuert werden kann. Fällt durch irgendwelche Umstände der Druck in den Luftfederbälgen der ersten Fahrzeugachse auf den Wert Null ab, so wird in Abhängigkeit von der das zweite Relaiskolbenteil 16 beaufschlagenden zweiten Druckfeder 18 ein bestimmter Druck in die Luftfederbälge der zweiten Fahrzeugachse eingesteuert und aufrechterhalten, so daß ein Ausfall der Federkraft an beiden Fahrzeugachsen mit großer Sicherheit verhindert wird.

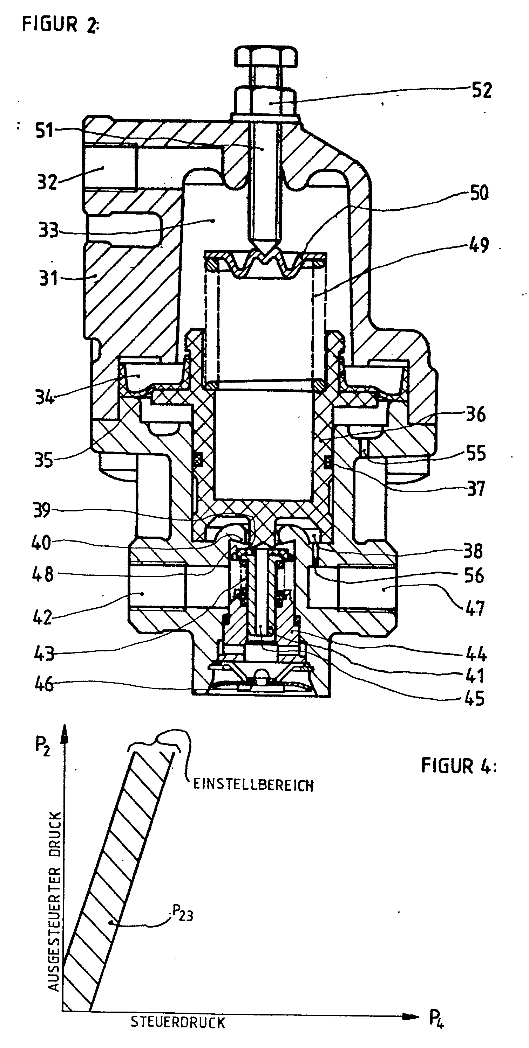

Die Fig. 2 zeigt eine vereinfachte Ausführung des im vorstehenden beschriebenen Relaisventils.

In einem Ventilgehäuse 31 ist ein Steuereingang 32 angeordnet, der über einen im Ventilgehäuse 31 vorgesehenen Federraum 33 eine erste Steuerkammer 34 mit hier nicht dargestellten Luftfederbälgen einer ersten Fahrzeug - achse verbindet. Die Steuerkammer 34 wird von einem als Hohlkolben ausgebildeten Relaiskolben 36, der von einer ringförmigen Membran 35 umschlossen wird, begrenzt. Eine Druckfeder 49 liegt auf einem Absatz im Relaiskolben 36 auf und wird von einer in einer Gewindebohrung des Ventilgehäuses 31 geführten Schraube 51 über einen Federteller 50 vorgespannt. Mittels einer selbstdichtenden Kontermutter 52 wird die Schraube 51 gegen ungewolltes Verdrehen gesichert. Ein im Ventilgehäuse 31 vorgesehener Druckmitteleingang 42 verbindet über eine Einlaßkammer 48 eine zweite Steuerkammer 38 und einen Druckmittelaus-

- 10

gang 47 einen Druckmittel-Vorratsbehälter mit den Luftfederbälgen einer nicht dargestellten zweiten Fahrzeugachse. Die zweite Steuerkammer 38 wird ebenfalls vom
Relaiskolben 36 begrenzt, der von der Wandung der als
zweite Steuerkammer 38 dienenden Gehäusebohrung mittels
eines in die Relaiskolbenwand eingelegten Dichtrings 37
abgedichtet geführt wird. Ein am Boden des Relaiskolbens
36 vorgesehener Fortsatz ragt durch eine Bohrung eines
die Einlaßkammer 48 von der zweiten Steuerkammer 38
trennenden Gehäusesteges in die Einlaßkammer 48 hinein.
Der Fortsatz dient als Auslaßventilsitz 39, der Gehäusesteg ist als Einlaßventilsitz 40 ausgebildet. In der
Einlaßkammer 48 ist ein mit einer in axialer Richtung verlaufenden Bohrung versehener, ringförmiger Körper 44 befestigt, welcher zur Halterung und Führung eines Doppelsitzventil-Verschlußkörpers 41 dient. Der Doppelsitzventil-
Verschlußkörper 41 wird von einer sich am ringförmigen
Körper 44 abstützenden Feder 43 beaufschlagt. Über eine
den Doppelsitzventil-Verschlußkörper 41 in axialer Richtung
durchdringende Bohrung 45 und eine im Ventilgehäuse 31
vorgesehene Entlüftung 46 ist die zweite Steuerkammer 38
mit der Atmosphäre verbindbar.
Um ein sich bildendes Luftpolster zu vermeiden, ist es
zweckmäßig, den Raum unter der Membran 35 über eine
Bohrung 55 mit der Atmosphäre zu verbinden. Eine zwischen
dem Druckmittelausgang 47 und der zweiten Steuerkammer 38
vorgesehene Drosselbohrung 56 verhindert schlagartige
Druckveränderungen in der zweiten Steuerkammer 38.

Die Funktion dieses Relaisventils wird nachstehend unter
Zuhilfenahme des in Fig. 4 dargestellten Diagramms näher
erläutert.

Es wird angenommen, daß die erste Steuerkammer 34 des
Relaisventils von der Druckluft aus den nicht dargestellten Luftfederbälgen einer ersten Fahrzeugachse über den Steuereingang 32 und den Federraum 33 belüftet wird. Gleichzeitig gelangt Druckluft aus einem ebenfalls nicht gezeigten Druckmittel-Vorratsbehälter durch den Druckmitteleingang 42, die Einlaßkammer 48, das geöffnete Einlaßventil 40,41 sowie die zweite Steuerkammer 38 und den Druckmittelausgang 47 zu den Luftfederbälgen einer zweiten Fahrzeugachse. Der sich in der zweiten Steuerkammer 38 aufbauende Druck verschiebt den Relaiskolben 36 gegen die Kraft der Druckfeder 49 und den auf der gegenüberliegenden Wirkfläche des Relaiskolbens 36 lastenden Druck aus den Luftfederbälgen der ersten Fahrzeugachse. Hat der Relaiskolben 36 einen vom Druck in der zweiten Steuerkammer 38 abhängigen bestimmten Weg zurückgelegt, so legt sich der Doppelsitzventil-Verschlußkörper 41 auf den Einlaßventilsitz 40 auf. Das Einlaßventil 40, 41 ist jetzt geschlossen und die Druckmittelzufuhr vom Druckmittel-Vorratsbehälter zu den Luftfederbälgen der zweiten Fahrzeugachse ist unterbrochen (siehe Diagramm Fig. 4 Druck P 23). Steigt der Druck in den Luftfederbälgen der ersten Fahrzeugachse an, so verschiebt der sich in der ersten Steuerkammer 34 aufbauende Druck den Relaiskolben 36 gegen den in der zweiten Steuerkammer 38 anstehenden Druck. Der Doppelsitzventil-Verschlußkörper 41 wird dabei vom Einlaßventilsitz 40 abgehoben, so daß wieder Druckluft vom Druckmittel-Vorratsbehälter in die Luftfederbälge der zweiten Fahrzeugachse strömen kann.

Sinkt der Druck in den Luftfederbälgen der ersten Fahrzeugachse und in der ersten Steuerkammer 34 soweit ab, daß ein vorbestimmter Differenzwert zwischen dem Druck in den Luftfederbälgen der ersten Fahrzeugachse und dem Druck in den Luftfederbälgen der zweiten Fahrzeugachse überschritten wird, so wird der Relaiskolben 36 vom Druck in der zweiten Steuerkammer 38 soweit in Richtung auf die erste Stueerkammer 34 zu verschoben, bis das Einlaßventil 40,41 geschlossen ist und der Auslaßventilsitz 39 vom Doppelsitzventil-Verschlußkörper 41 abhebt. Über das Auslaßventil 39,41 und die Entlüftung 46 entweicht jetzt Druckluft aus der zweiten Steuerkammer 38 und somit auch aus den Luftfederbälgen der zweiten Fahrzeugachse. Ist der Druck in den Luftfederbälgen der zweiten Fahrzeugachse und in der zweiten Steuerkammer 38 auf einen durch die eingestellte Vorspannung der Druckfeder 49 vorbestimmten Wert abgesunken, schließt das Auslaßventil 39,41. Das Einlaßventil 40,41 bleibt solange geschlossen, bis durch einen Druckanstieg in den Luftfederbälgen der ersten Fahrzeugachse und somit auch in der ersten Steuerkammer 34 der Steuerkolben 36 in Richtung auf die zweite Steuerkammer 38 zu verschoben wird.

Die Druckfeder 49 ist so bemessen, daß bei Ausfall des Steuerdruckes in der ersten Steuerkammer 34 das Einlaßventil 40,41 in der Offenstellung gehalten wird. Durch diese Maßnahme ist bei zu niedrigem Druck in der ersten Steuerkammer 34 oder auch bei Ausfall des Steuerdruckes sichergestellt, daß in den Luftfederbälgen der zweiten Fahrzeugachse ein Mindestdruck vorhanden ist.

Patentansprüche

1. Steuereinrichtung für ein luftgefedertes Fahrzeug mit einer ersten und einer zweiten luftgefederten Achse, wobei der Druck in den Luftfederbälgen der zweiten Achse in Abhängigkeit vom Druck in den Luftfederbälgen der ersten Achse gesteuert wird, gekennzeichnet durch die folgenden Merkmale:

a) Es ist ein Relaisventil vorgesehen;

b) das Relaisventil weist wenigstens einen mit den Luftfederbälgen der ersten Achse verbundenen Steuereingang (2,3,32) auf;

c) das Relaisventil besitzt einen mit einer Druckmittelquelle verbundenen Druckmitteleingang (27, 42) ;

d) das Relaisventil weist wenigstens einen mit den Luftfederbälgen der zweiten Achse verbundenen Druckmittelausgang (29,47) auf;

e) das Relaisventil ist so ausgebildet, daß bei ausbleibendem oder relativ geringem Druck am Steuereingang (2,3,32) der Druck am Druckmittelausgang (29,47) einen Mindestwert aufweist.

2. Steuereinrichtung nach Anspruch 1, gekennzeichnet durch die folgenden Merkmale:

a) Das Relaisventil weist einen geteilten Relaiskolben (6,16) auf;

b) das erste Relaiskolbenteil (6) begrenzt mindestens eine Steuerkammer (4,5), welche mit dem Steuereingang (2,3) verbunden ist;

c) das zweite Relaiskolbenteil (16) begrenzt eine mit dem Druckmittelausgang verbundene zweite Steuerkammer (19);

d) zwischen dem ersten Relaiskolbenteil (6) und dem zweiten Relaiskolbenteil (16) ist eine Druckfeder (18) angeordnet;

e) die zweite Steuerkammer (19) ist über ein Mehrwegeventil (30,24,20) mit einer Einlaßkammer (28), welche mit dem Druckmitteleingang (27) in Verbindung steht, verbindbar;

f) das zweite Relaiskolbenteil (16) steht mit dem Mehrwegeventil (30,24,20) in Wirkverbindung.

3. Steuereinrichtung nach Anspruch 1, dadurch gekennzeichnet, daß das Relaisventil einen als Membrankolben ausgebildeten Relaiskolben aufweist.

4. Steuereinrichtung nach Anspruch 2, dadurch gekennzeichnet, daß beide Relaiskolbenteile (6,16) als Membrankolben ausgebildet sind.

5. Steuereinrichtung nach wenigstens einem der vorhergehenden Ansprüche, dadurch gekennzeichnet, daß zwischen der zweiten Steuerkammer (19,38) und dem zum Verbraucher führenden Druckmittelausgang (29,47) eine Drosselbohrung (54,56) vorgesehen ist.

FIGUR 1:

15
13
8
4
2
11
1
12
14
6
10
3
9
5
7
16
53
20
17
30
18
28
19
27
29
23
54
26
21
24
22
25

FIGUR 3:

AUSGESTEUERTER DRUCK

EINSTELLBEREICH

$P_{22}$

$P_{21}$

STEUERDRUCK

FIGUR 2:

51
32
33
31
34
35
39
40
48
42
43
46

52
50
49
36
55
37
38
56
47
44
41
45

FIGUR 4:

$P_2$

AUSGESTEUERTER DRUCK

EINSTELLBEREICH

$P_{23}$

STEUERDRUCK

$P_4$